## Europäisches Patentamt

## European Patent Office

## Office européen des brevets

(19)

(11) Publication number: **0 107 092**
**A2**

# EUROPEAN PATENT APPLICATION

(12)

(21) Application number: **83109672.2**

(22) Date of filing: **28.09.83**

(51) Int. Cl.³: **H 04 N 9/60**

(30) Priority: **29.09.82 US 426499**

(43) Date of publication of application: **02.05.84**
**Bulletin 84/18**

(84) Designated Contracting States: **DE FR GB NL**

(71) Applicant: **HONEYWELL INC., Honeywell Plaza, Minneapolis Minnesota 55408 (US)**

(72) Inventor: **Jackman, Earle G., 15810-228th Avenue, Elk River Minnesota 55330 (US)**

(74) Representative: **Rentzsch, Heinz et al, Honeywell Europe S.A. Holding KG Patent- und Lizenzabteilung Kaiserleistrasse 55, D-6050 Offenbach am Main (DE)**

(54) **Method and apparatus for generating multicolor and/or threedimensional pictures.**

(57) For generating multicolor three-dimensional images a television camera (11) having interlace circuitry (23) and apparatus (14, 20) for directing to said camera light, from a subject (12) are provided, said light reaching first and second mutually spaced sites. Shutter means (15, 21) alternately interrupt the light from the sites at the frequency of the interlace circuitry, so that the output from the camera is a video signal comprising an alternating series of interlaced left and right video frames in stereo relationship.

HONEYWELL INC.                          September 26, 1983
Honeywell Plaza                         A2608133 EP
Minneapolis, Minn. USA                  HR/ep

## Method and Apparatus for Generating
## Multicolor and/or Three-dimensional Pictures

This invention relates to the field of electro-optical communication, and particularly to the generation of multicolor and/or three-dimensional pictures.

### Background of the Invention

It is known from US-A 4 286 286 to provide apparatus by which television pictures received at a local monitor may be given a three-dimensional appearance. In that system, shuttering means are provided at the television transmitter to alternately transmit signals representative of the appearance of a subject from two horizontally spaced viewpoints. The shuttering is correlated with the interlace component of the transmitted signal, and synchronized shuttering means are provided at the monitor, to be worn as spectacles by the observer. The human brain functions, as is well known, to combine the rapidly alternating, slightly different right and left images to give the appearance of a three-dimensional subject.

### Summary of the Invention

It was discovered that the human brain is equally capable of combining rapidly alternating right and left images in dichroically related colors, to give the appearance of a subject in full color. The principle is somewhat related to the procedure by which full-color prints are obtained in the "polaroid" camera using only two dyes.

0107092

It is the object of the invention to generate color images and in particular three-dimensional pictures in color by using monochrome transmitters and receivers. This objective is achieved by the method of claim 1 and the apparatus characterized in the subsequent claims.

Brief Description of the Drawing

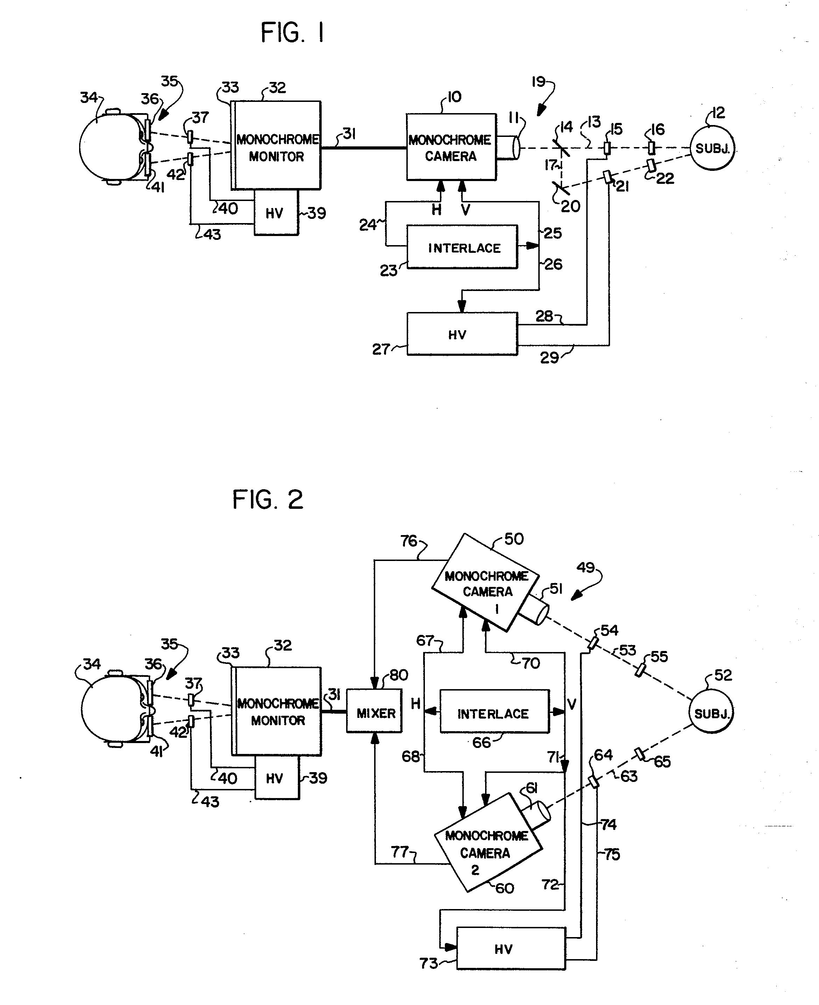

In the drawing, FIGURE 1 shows a color television system according to the invention using a single monochrome camera and a monochrome monitor, and FIGURE 2 shows a similar system using two monochrome cameras.

Description of the Preferred Embodiment

In FIGURE 1 a system 19 comprises a monochrome television camera 10 having its lens 11 directed toward a subject 12. Interposed in the direct line of sight 13 is a 50 percent transmission mirror 14, an electrooptical shutter 15, and a color filter 16. Mirror 14 acts as a beam splitter and establishes a second line of sight 17 which includes a mirror 20, a second electrooptical shutter 21, and a second color filter 22. The colors of filters 16 and 22 are dichroically related red and green.

Mirror 20 is so positioned that the lines of sight 13 and 17 have the same relation to subject 12 as would those from the eyes of an observer having the normal interocular spacing. Conventional interlace circuitry 23 supplies horizontal and vertical sweep signals on conductors 24 and 25 to camera 10, and conductor 25 is extended on conductor 26 to control a high voltage source 27, which alternately enables and disables shutters 15 and 21, on conductors 28 and 29, each shutter being open only when the other is closed.

The output of camera 10 is a composite interlace and video signal and is transmitted through any conventional conductive or radio link 31 to a monochrome television monitor 32 having a viewing screen 33. An observer 34 is provided with viewing apparatus 35 comprising a pair of spectacles having left and right eyepieces provided with shutters and filters. The left eyepiece has a color filter 36 like filter 16, and a shutter 37 which is opened and closed by an electrical signal on conductor 40 in synchronism with operation of shutter 15. The right eyepiece has a color filter 41 like filter 22, and a shutter 42 which is opened and closed by an electrical signal from high voltage source 39 on conductor 43 in synchronism with operation of shutter 21. The synchronization of the shutters is maintained by the interlace component of the composite signal.

FIGURE 2 shows a modified system 49 in which elements 31-43 are as in FIGURE 1. In FIGURE 2 a pair of cameras 50 and 60 are used instead of the periscope comprising mirrors 14 and 20 of FIGURE 1. Camera 50 has a lens 51 directed toward a subject 52 along a line of sight 53 which includes an electrooptical shutter 54 and a color filter 55. Camera 60 has a lens 61 directed toward subject 52 along a line of sight 63 which includes an electrooptical shutter 64 and a color filter 65. The colors of filters 55 and 65 are dichroically related red and green.

Conventional interlace circuitry 66 supplies horizontal sweep signals to cameras 50 and 60 on conductors 67 and 68, and supplies vertical sweep signals to cameras 50 and 60 on conductors 70 and 71. Conductor 71 is extended at 72 to control a high voltage supply 73, which alternately enables and disables shutters 54 and 64, on conductors 74 and 75, each shutter being open only when the other is closed. The signals from cameras 50 and 60 are supplied by conductors 76 and 77 to a mixer 80, whose output comprises transmission link 31.

OPERATION

The operation of the invention will now be explained. Referring first to FIGURE 1, at a particular instant in the sweep of camera 10 and that of monitor 32 shutters 21 and 42 are closed, shutters 15 and 37 are open, light is reaching camera 10 from subject 12 along line 13 through red filter 16, and light is reaching the observers left eye from monitor screen 33 through red filter 36. An instant later the system is altered so that shutters 15 and 37 are closed, shutters 21 and 42 are open, light is reaching camera 10 from subject 12 along line 17 through green filter 22, and light is reaching the observers right eye from monitor screen 33 through green filter 41. This alternation continues at the vertical sweep rate of the camera and monitor. Because of the phenomenon of persistence of vision the rapidly recurring images are perceived as a continuous image, and the brain of the observer combines the left and right images, which are in dichroic colors, to give a single apparent image in the colors of the subject itself.

Operation of the embodiment of the invention shown in FIGURE 2 is the same, except that the images of the subject are not combined optically for a single camera, using the mirrors of FIGURE 1, but are supplied to separate cameras whose output signals are then electrically combined in mixer 80 for transmission to monitor 32.

From the above it will be evident that the invention comprises a system for producing three-dimensional color images in a monochrome television system, using shuttering means and dichroic filters at the transmitter and the receiver to give rapidly alternating images which the brain of the observer functions to combine into a perception of the subject in depth and color.

Numerous characteristics and advantages of the invention have been set forth in the foregoing description, together with details of the structure and function of the invention, and the novel features thereof are pointed out in the appended claims. The disclosure, however, is illustrative only, and changes may be made in detail, especially in matters of shape, size, and arrangement of parts, within the principle of the invention, to the full extent indicated by the broad general meaning of the terms in which the appended claims are expressed.

Claims:

1. A method of producing the appearance of normal color in the image perceived by a viewer observing a monochrome television display, c h a r a c t e r i z e d   b y  presenting rapidly alternating images severally to the eyes of the observer through first and second dichroic filters, whereat one of said images represents the appearance of a subject as seen through another of said first type of filters and the other of said images represents the appearance of the subject as seen through another of said second type of filters.

2. An electro-optical system for generating three-dimensional pictures, c h a r a c t e r i z e d   b y

   a) means (10) for providing a pair of monochrome video signals representative of the appearance of a subject (12) as seen, through first (16) and second (22) dichroically related filters, from left and right viewpoints horizontally spaced by substantially the human interocular distance;

   b) interlace circuitry (23, 15, 21) for creating a composite signal including an interlace component and a video component in which said video signals are alternated at a predetermined rate;

   c) a monochrome television monitor (32, 33), including video circuitry, for receiving said composite signal and producing a monochrome image determined by said video signals;

   d) viewing means (35 - 43) comprising a pair of spectacles having left (37) and right (42) shutter means operated in synchronism with said interlace circuitry, so that a left eyepiece is enabled and a right eyepiece is disabled when said image is representative of the video signal from said left viewpoint, and said right eyepiece is enabled and said left eyepiece is disabled when said image is representative of the video signal from said right viewpoint; and

   e) dichroic filters (36, 41) in said left and right eyepieces corresponding to the dichroic filters (16, 22) at the left and right viewpoints respectively.

3. Apparatus according to claim 2, c h a r a c t e r - i z e d    b y
f) a video camera (10) for generating a pair of monochrome video signals;
g) optical means (14, 26) providing two lines of sight from the subject (12) to the camera (10) through first and second horizontally spaced viewpoints;
h) shutter means (15, 21) for alternately enabling and disabling said lines of sight to prevent light from reaching said camera simultaneously along more than one of said lines of sight.

4. Apparatus according to claim 2 or 3, c h a r a c - t e r i z e d    i n    t h a t    the colors of said filters (16, 37; 22, 42) are red and green.

5. Apparatus according to one of claims 2 to 4, c h a r a c- t e r i z e d    b y:
i) a television camera (10) having interlace circuitry (23);
j) means (14, 20) for directing to said camera light, from a subject (12), reaching first and second mutually spaced sites; and
k) shutter means (15, 21) for alternately interrupting the light from said sites at the frequency of said interlace circuitry, so that the output from said camera is a video signal comprising an alternating series of interlaced left and right video frames in stereo relationship. (Fig. 1).

6. Apparatus according to claim 5, c h a r a c t e r - i z e d    i n    t h a t    said sites (14, 20) are mutually spaced by generally the distance between an observer's eyes.

7. Apparatus according to claim 5 or 6, c h a r a c t e r - i z e d    i n    t h a t

- 9 -

0107092

l) a periscopic apparatus is provided including first (14) and second (20) mirrors forming said first and second sites and adapted to direct light from said sites to a common site of the camera;

m) shutters (15, 21) are positioned between the subject (12) and the mirrors; and

n) control means (27) alternately actuate said shutters in synchronism with the interlaced circuitry of the camera.

8. Apparatus according to claim 7, c h a r a c t e r - i z e d   i n   t h a t   said shutters (15, 21) are electro-optical ceramics.

9. Apparatus according to one of the claims 3 to 8, c h a r a c t e r i z e d   i n   t h a t   the camera (10) is a monochrome video camera.

10. Apparatus according to claim 3 or 4, c h a r a c t e r - i z e d   i n   t h a t

o) two monochrome video cameras (50, 60) view the subject (52) along different lines of sight (53, 63);

p) a common interlace circuitry (66) controls both cameras;

q) a common high voltage source (73) alternately enables shutter means (54, 64) provided in said lines of sight;

r) a mixer (80) is connected to outputs of the two cameras and combines their output signals for transmission to a monochrome monitor (32) (Fig. 2).

FIG. 1

FIG. 2